Europäisches Patentamt

European Patent Office

Office européen des brevets

(11) Veröffentlichungsnummer: **0 198 122**
A1

# EUROPÄISCHE PATENTANMELDUNG

(21) Anmeldenummer: 85116371.7

(22) Anmeldetag: 20.12.85

(51) Int. Cl.⁴: **F 27 D 3/02**, F 27 B 9/24, F 27 D 3/00, B 65 G 39/02

(30) Priorität: 18.04.85 DE 3514085

(43) Veröffentlichungstag der Anmeldung: 22.10.86 Patentblatt 86/43

(84) Benannte Vertragsstaaten: AT CH DE FR GB IT LI NL SE

(71) Anmelder: Buchtal Gesellschaft mit beschränkter Haftung, D-8472 Schwarzenfeld (DE)

(72) Erfinder: Bard, Martin, D-8450 Amberg (DE)

(74) Vertreter: Betzler, Eduard, Dipl.-Phys. et al, Postfach 70 02 09 Plinganserstrasse 18a, D-8000 München 70 (DE)

(54) Rollenofen zum Brennen eines flachen oder plattenförmigen keramischen Brenngutes.

(57) Beschrieben wird ein Rollenofen zum Brennen eines flachen oder plattenförmigen keramischen Brenngutes, das von dem angetriebenen Rollenteppich des Rollenofens einschichtig und liegend durch den Ofenkanal hindurchgeführt wird, der sich dadurch kennzeichnet, daß wenigstens ein Teil der Rollen eine leichte Konizität oder Balligkeit aufweist und diese Rollen einzeln oder in Gruppen abwechselnd mit entgegengesetzt gerichteter Konizität den Rollenteppich bilden.

EP 0 198 122 A1

_-1-_

Rollenofen zum Brennen eines flachen oder plattenförmigen

keramischen Brenngutes

Die Erfindung bezieht sich auf einen Rollenofen und richtet sich insbesondere auf die Ausbildung der den Rollenteppich bildenden Rollen.

Bei das Brenngut einschichtig und ohne Brennhilfsmittel aus feuerfestem Material brennenden Rollenöfen durchläuft das Brenngut die Vorheiz-, Brenn- und Kühlzone auf einem Rollenteppich, dessen aus einem Spezialstahl oder Keramikmaterial bestehende Rollen von außerhalb des Ofens angetrieben werden. Der besondere Vorteil dieser Öfen besteht darin, daß der Einsatz von Wagen und feuerfesten Brennhilfsmitteln entfällt. Diese Transport- und Stützmittel stellen nämlich eine erhebliche Masse dar, die vom Ofen aufgeheizt werden muß und in der Kühlzone wieder zur Abkühlung zu bringen ist. Es wird also ein erheblicher Teil der dem Ofen zum Brand des Brenngutes zugeführten Energie ungenützt verschwendet.

Bei solchen einschichtig und ohne Einsatz von Transport- und Brennhilfsmitteln betriebenen Rollenöfen wird nicht nur eine wesentliche Energieeinsparung erreicht, sondern es läßt sich auch der Brennvorgang schneller und gleichmäßiger durchführen, wobei man außerdem noch zu einem erheblich verkürzten Produktionszyklus gelangt.

Im allgemeinen ist es jedoch nicht zu vermeiden, daß sich die das Brenngut transportierenden Rollen unter dem Einfluß der im Ofen herrschenden hohen Temperaturen etwas verbiegen, unrund werden oder sonstige Deformationen erfahren.

Die Konsequenz dieser Verformungen der Rollen ist eine wechselseitige Verschiebung des flachen oder plattenförmigen Brenngutes beim Durchgang durch den Ofenkanal, so daß es zu unbeabsichtigten Berührungen des flachen oder plattenförmigen Brenngutes an den Rändern kommt.

Dabei treten mitunter Verbackungen infolge der Glasur oder sonstige Beschädigungen der Ränder des flachen oder plattenförmigen Brenngutes auf. Insbesondere aber wandert das plattenförmige oder flache Brenngut auf seinem Weg durch den Ofen zu dessen seitlichen Begrenzungswandungen hinaus, wo es sich übereinander schiebt und gegebenenfalls aufstaut, was zu Beschädigungen des Brenngutes und/oder Produktionsstörungen führen kann. Der bisher gewählte Weg zur Lösung dieses Problems bestand darin, an den Rändern einen Freiraum zu belassen, der etwa 15 bis 20 % der Ofenbreite entspricht. Damit wird aber die Ofenkapazität nur unvollkommen ausgenutzt.

Das Problem, das plattenförmige Brenngut wenigstens an den Kanten zu schützen, indem man ihm eine solche Form gibt, daß gegenseitige Berührungen infolge des unvermeidbaren Auswanderns des Plattengutes bedeutungslos bleiben, ist bereits in der DE-PS 30 32 451 angesprochen und dadurch gelöst worden, daß das flache oder plattenförmige Brenngut am Umfang wenigstens teilweise einen Rand mit Sollbruchstelle gegenüber dem Plattenumfang aufweist. Damit besteht die Möglichkeit, den Rand des flachen oder plattenförmigen Brenngutes nach dem Brennen längs der Sollbruchstelle ohne Schwierigkeiten zu entfernen und somit längs dieser Bruchkante zu einer sauberen und unbeschädigten Kante zu kommen.

Selbstverständlich erfordert dieses Vorgehen einen zusätzlichen Arbeitsgang nicht nur bei der Formgebung des flachen oder plattenförmigen keramischen Brenngutes, sondern auch an den aus dem Ofen austretenden gebrannten keramischen Platten, was es erstrebenswert erscheinen läßt, nach einer wirtschaftlicheren Verfahrensweise zu suchen.

Eine Lösung des Problems, dem Anbacken des Brenngutes an den Rollen des Rollenofens abzuhelfen, wird in der DE-PS 33 01 660 angegeben, wo eine Vorrichtung zum Abstützen flacher keramischer Gegenstände in einem Rollenofen beschrieben ist, die trotz Glasurniederschlags eine einwandfreie Abstützung und einen einwandfreien Transport der zu brennenden Gegenstände gewährleisten soll, ohne daß Anbackungen des Brenngutes an den Rollen auftreten. Die Lösung wird darin gesehen, daß die Rohre Erhöhungen und Vertiefungen aufweisen, wobei die zu brennenden Gegenstände jeweils nur auf den Erhöhungen aufliegen. Diese Erhöhungen und Vertiefungen verlaufen nach der Lehre dieser Patentschrift in Längsrichtung der Transportrollen, die als Hohlrohre ausgebildet sind, die senkrecht zur Transportrichtung entsprechende Erhebungen und Vertiefungen aufweisen.

Auch bei einer derartigen Ausbildung des Rollenteppichs des Brennofens ist jedoch ein Auswandern des zu brennenden flachen oder plattenförmigen keramischen Brenngutes in Richtung auf die Seitenwandungen des Ofenkanals nicht verhindert.

Hier will die Erfindung Abhilfe schaffen und schlägt
für einen Rollenofen zum Brennen eines flachen oder plattenförmigen keramischen Brenngutes, das von dem angetriebenen
Rollenteppich des Rollenofens einschichtig und liegend durch
den Ofenkanal hindurchgeführt wird, vor, daß wenigstens ein
Teil der Rollen eine leichte Konizität oder Balligkeit aufweist und diese Rolle einzeln oder in Gruppen abwechselnd
mit entgegengesetzt gerichteter Konizität angeordnet sind.
Die Konizität braucht dabei nur wenige Winkelgrade zu betragen.
Man kann die Wirkung dieser leicht konischen Rollen noch
unterstützen, wenn wenigstens die nicht konischen Rollen
auf wenigstens einem Teil ihrer Länge mit über ihrem Umfang
jeweils in sich geschlossenen Rillen versehen sind, die in
Abstand und Tiefe den Rillen einer auf der auf den Rollen
aufliegenden Flachseite des flachen oder plattenförmigen
Brenngutes vorgesehenen Parallelreliefierung entsprechen.

Diese Rillen verlaufen senkrecht zur Längs- und Drehachse
der Rollen und damit in Transportrichtung des Brennofens.

Damit erhält das flache oder plattenförmige keramische Brenngut auf seinem Weg durch den Ofenkanal eine zusätzliche Führung
und verläßt praktisch in dem Muster, in dem es in den Rollenofen einfährt, diesen am Ausgangsende, d.h. am Ende der Kühlzone.
Ein Auswandern des flachen oder plattenförmigen keramischen
Brenngutes zur Seite hin ist bei dieser Art der Rollenausbildung,
insbesondere in Kombination mit der Verwendung leicht konischer
Rollen praktisch vollständig ausgeschlossen.

Die Temperaturverteilung im Ofen selbst ist gleichmäßiger,
weil es nicht zu wechselseitigen Verschiebungen des Brenngutes und Stauungen desselben an den Ofenkanal Seitenbegrenzungen und damit zu Leerstellen kommt, wo die Wärmeeinwirkung des Ofens nicht auf Brenngut trifft. Von besonderer Bedeutung ist aber die bessere Handhabungsmöglichkeit des plattenförmigen keramischen Brenngutes am Ofenaustrittsende, wo nunmehr das Vereinzeln der einzelnen ausfahrenden Platten ohne Schwierigkeit vorgenommen werden kann.

Verwendet man gemäß der Weiterbildung der Erfindung gerillte Rollen, dann zeichnet sich ein in einem derartigen Rollenofen zu brennendes flaches oder plattenförmiges keramisches Brenngut vorteilhaft dadurch aus, daß die Tiefe der Rillen der Reliefierung auf der entsprechenden Flachseite des plattenförmigen Brenngutes zwischen 5 und 10 %, vorzugsweise 7,5 % der Brenngutdicke beträgt. Damit ist eine ausreichende Führung durch die vorstehenden Rippen gewährleistet, andererseits aber auch die Materialstärke des flachen oder plattenförmigen Brenngutes nicht so geschwächt, daß dieses an Festigkeit verliert.

In weiterer Ausbildung der Erfindung beträgt die Reliefierung vier Rillen pro Zentimeter Breite des flachen oder plattenförmigen Brenngutes. Sie kann sich über die gesamte Auflagefläche des Brenngutes erstrecken, aber auch auf zueinander parallele Streifen beschränkt sein.

Vorzugsweise sind die Rollen für einen derartigen Rollenofen dann so ausgebildet, daß die Reliefierung der Rollen des Rollenofens ein kongruentes Abbild der Reliefierung des flachen oder plattenförmigen keramischen Brenngutes darstellt.

Mit dem Vorschlag nach der Erfindung wird die Ofenkapazität erhöht, das Sortierergebnis verbessert und die eingesetzte Energie so genutzt, daß es an den gewünschten Stellen voll zur Wirkung kommt.

Die Zeichnung zeigt in

Fig. 1    zwei gegeneinander gesetzte leicht konische Rollen als
          Teil eines Rollenteppichs für einen Rollenofen zum
          Brennen keramischer Platten, von denen zwei schematisch
          angedeutet sind und wobei die Konizität der Rollen
          stark übertrieben gezeichnet ist;

Fig. 2    einen Ausschnitt aus einer mit Rillen versehenen Rolle;
          und in

Fig. 3    eine Unteransicht eines plattenförmigen keramischen
          Brenngutes.

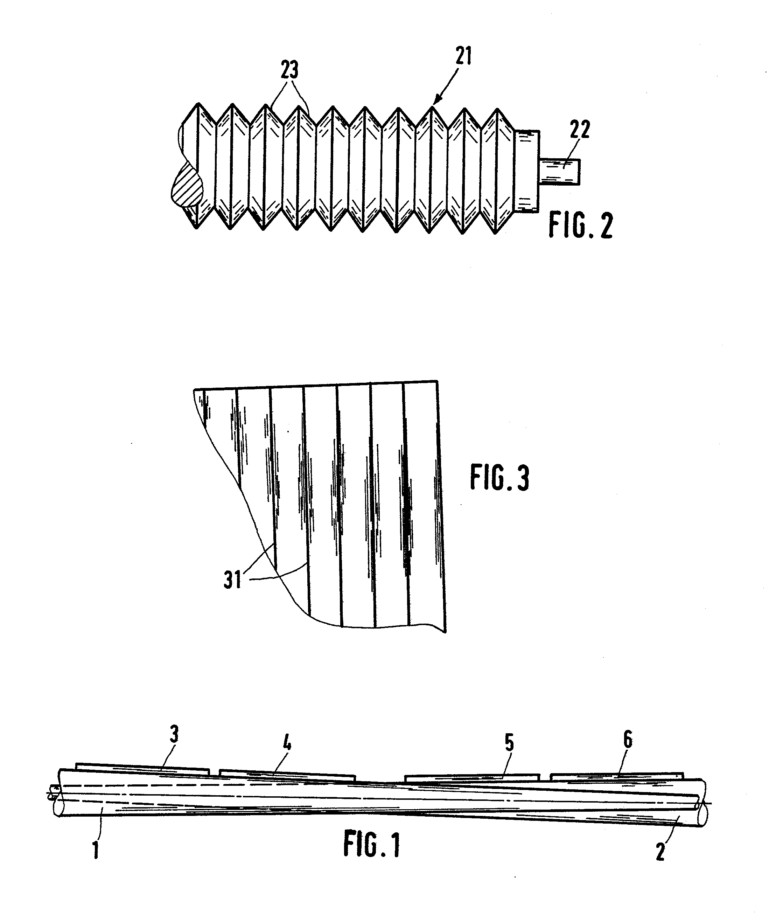

Fig. 1 sind zwei leicht konische Rollen 1 und 2 als Teil des
Rollenteppichs eines Rollenofens zum Brennen flachen oder
plattenförmigen keramischen Brenngutes angedeutet, die von
außerhalb der seitlichen, nicht gezeichneten Begrenzungswände
des Ofenkanals angetrieben werden.

Die Konizität der Rollen ist übertrieben dargestellt. Sie liegt
in der Größenordnung von nur wenigen Winkelgraden. Das genügt,
um das Brenngut, wiedergegeben als keramische Platten 3, 4, 5 und 6
nach innen und damit von den nicht gezeichneten seitlichen Begrenzungswänden des Ofenkanals fernzuhalten. Selbstverständlich können die
Rollen auch eine geringe Balligkeit aufweisen, die jedoch zeichnerisch
nicht dargestellt ist.

Verstärkt wird der Führungseffekt, wenn in Weiterbildung der Erfindung
nach Fig. 2 Rollen 21, bei denen es sich um zylindrische, aber auch um
leicht konische Rollen handeln kann, eine senkrecht zu Achse 22
stehenden Reliefierung 23 aufweisen, der nach Fig. 3 eine entsprechende Reliefierung 31 auf der auf der Rolle 21 aufliegenden
Seite des plattenförmigen keramischen Brenngutes entspricht. Man kann ohne weiteres aus der Zeichnung erkennen, daß sich eine entsprechende ausgezeichnete Führung des plattenförmigen keramischen Brenngutes 32 auf der Rolle 21 ergeben muß.

Mitunter genügt es, insbesondere bei Verwendung eines plattenförmigen Brenngutes in der Ausbildung nach Fig. 3 auf den Einsatz konischer Rollen zu verzichten und das Rollenbett nur auf im allgemeinen zylindrischen Rollen 21 in der Ausbildung nach Fig. 2 zu bilden. Ferner ist es selbstverständlich möglich, auch die konischen Rollen 1, 2 mit Rillen wie bei der Rolle 21 nach Fig. 2 zu versehen.

***

0198122

<u>P a t e n t a n s p r ü c h e</u>

1.  Rollenofen zum Brennen eines flachen oder plattenförmigen
keramischen Brenngutes, das von dem angetriebenen Rollenteppich
des Rollenofens einschichtig und liegend durch den Ofenkanal
hindurchgeführt wird, dadurch  g e k e n n z e i c h n e t ,
daß wenigstens ein Teil der Rollen eine leichte Konizität oder
Balligkeit aufweist und diese Rollen einzeln oder in Gruppen abwechselnd mit entgegengesetzt gerichteter Konizität den Rollenteppich bilden.

2.  Rollenofen, insbesondere nach Anspruch 1, dadurch
g e k e n n z e i c h n e t , daß wenigstens ein Teil der Rollen
auf wenigstens einem Teil ihrer Länge mit über ihren Umfang jeweils in sich geschlossenen Rillen versehen ist, die in Abstand
und Tiefe Rillen einer auf der auf den Rollen aufliegenden Flachseite des flachen oder plattenförmigen Brenngutes vorgesehenen
Parallelreliefierung entsprechen.

3.  Im Rollenofen nach Anspruch 2 zu brennendes, flaches oder
plattenförmiges Brenngut, dadurch  g e k e n n z e i c h n e t ,
daß die Tiefe der Rillen der Reliefierung auf der entsprechenden
Flachseite des flachen oder plattenförmigen Brenngutes zwischen 5%
und 10 %, vorzugsweise 7, 5 % der Brenngutdicke beträgt.

4.  Brenngut nach Anspruch 3, dadurch  g e k e n n z e i c h -
n e t , daß die Reliefierung vier Rillen pro Zentimeter Breite
des flachen oder plattenförmigen Brenngutes beträgt.

5.  Rolle für einen Rollenofen nach Anspruch 2 zum Brennen von
flachem oder plattenförmigem keramischen Brenngut nach Anspruch 3
und/oder 4, dadurch  g e k e n n z e i c h n e t , daß die Reliefierung der Rollen des Rollenofens ein kongruentes Abbild der
Reliefierung des flachen oder plattenförmigen keramischen Brenngutes
darstellt.

\*\*\*

0198122

**FIG.2**

**FIG.3**

**FIG.1**

### Europäisches Patentamt

## EUROPÄISCHER RECHERCHENBERICHT

EP 85 11 6371

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-1 468 837 (H.L.B. SCHRECK) <br> * Spalte 1, Zeilen 37-48; Figur 1 * | 1 | F 27 D 3/02 <br> F 27 B 9/24 <br> F 27 D 3/00 <br> B 65 G 39/02 |
| | --- | | |
| E | EP-A-0 179 537 (SPECIAAL MACHINEFABRIEK J.H. VAN UITERT B.V.) <br> * Ansprüche; Figuren * | 1 | |
| | --- | | |
| A | US-A-1 416 727 (T.G. McDOUGAL) <br> * Ansprüche; Figuren * | 2,5 | |
| | --- | | |
| A | US-A-3 985 495 (J.A. CABLE) <br> * Ansprüche; FIguren * | 2 | |
| | --- | | |
| A | DE-A-2 642 627 (SIEMENS AG) <br> * Ansprüche; Figuren * | 2 | RECHERCHIERTE SACHGEBIETE (Int. Cl.4) |
| | --- | | |
| A,D | DE-A-3 032 452 (SCHNEIDER) | | F 27 B <br> F 27 D <br> B 65 G <br> C 03 B <br> C 21 D |
| | ----- | | |

Der vorliegende Recherchenbericht wurde für alle Patentansprüche erstellt.

| Recherchenort <br> DEN HAAG | Abschlußdatum der Recherche <br> 10-06-1986 | Prüfer <br> COULOMB J.C. |
|---|---|---|